# FASCICULE DE BREVET EUROPEEN

(11) **EP 0 903 656 B1**
(45) Date de publication et mention de la délivrance du brevet: **15.10.2003**
(21) Numéro de dépôt: 98401337.5
(22) Date de dépôt: 04.06.1998
(51) Int. Cl.: G05B 19/427

(54) **Procédé d'automatisation des taches répétitives sur un engin et dispositif correspondant**
Verfahren und Einrichtung zur Automatisierung von sich wiederholenden Aufgaben
Method and device for automatizing repetitive tasks on a machine

(30) Priorité: 04.06.1997 FR 9706886
(43) Date de publication de la demande: 24.03.1999
(73) Titulaire: RENAULT AGRICULTURE, 78141 Velizy-Villacoublay (FR); Cemagref, 92162 Antony Cedex (FR)
(72) Inventeur: Berducat, Michel, 03330 Naves (FR); Devaux, Jean-François, 03140 Saint Germain de Salles (FR); Poirier, Jean-Paul, 92290 Chatenay Malabry (FR)
(74) Mandataire: Srour, Elie

(56) Documents cités:
- EP-A- 0 578 325
- DE-A- 4 342 252
- FR-A- 2 666 911
- FR-A- 2 671 118
- FR-A- 2 727 821
- GB-A- 2 279 774
- US-A- 5 019 761
- US-A- 5 050 771

## Description

La présente invention relève du domaine de l'automatisation des tâches devant être assurées par le conducteur dans un engin, par exemple dans un tracteur agricole.

La conduite d'un tracteur agricole impose au conducteur de nombreuses tâches répétitives, notamment lors d'un travail dans une parcelle de terre où un demi-tour doit être effectué à chaque extrémité de la parcelle. A chaque extrémité de la parcelle, le conducteur réalise différentes manoeuvres par action sur des leviers et des boutons de commande afin de contrôler différentes fonctions du tracteur telles que les relevages arrière et avant, les prises de force arrière et avant, le régime du moteur, le rapport de transmission, le sens d'avancement, l'enclenchement du pont avant du tracteur, le blocage des différentiels et des commandes auxiliaires, par exemple des distributeurs hydrauliques destinés à commander des actionneurs hydrauliques disposés sur des outils solidaires du tracteur. En général, un demi-tour nécessite de l'ordre de 10 à 15 actions élémentaires du conducteur. En raison du grand nombre de demi-tours effectués au cours d'une journée de travail, on cherche à réduire le nombre d'actions élémentaires du conducteur en vue de diminuer la pénibilité de son travail.

Dans l'art antérieur, on connaît par le document FR-A-2 666 911 (HUARD) un dispositif électronique de contrôle de la profondeur et du relevage d'une charrue semi-portée. Le dispositif est situé sur la charrue et comporte un calculateur dans lequel sont introduits des paramètres inhérents à la charrue et au tracteur, un capteur de l'angle de rotation du bâti de la charrue par rapport à une bielle d'attelage du tracteur, un capteur de l'angle de rotation du bras de support d'une roue de la charrue par rapport au bâti, ce qui permet d'en déduire la hauteur du bâti sur la roue, et des moyens de mesure de la distance parcourue par la roue, le calculateur élaborant un signal de commande de la vanne régulant l'entrée et la sortie du vérin de réglage de la hauteur du bâti par rapport à la roue à partir des signaux reçus en provenance des capteurs afin d'obtenir une entrée et une sortie progressives des corps de labour en début et en fin de raie. Toutefois, ce dispositif requiert l'introduction de paramètres liés à la charrue et au tracteur et doit donc être reconfiguré en cas de changement du tracteur. Ce dispositif monté sur la charrue s'occupe du vérin de réglage de la hauteur et du vérin de retournement, ce qui laisse au conducteur du tracteur de nombreuses actions à effectuer à chaque demi-tour. Enfin, le vérin de réglage de la hauteur du bâti par rapport à la roue arrière sera commandé d'une façon prédéterminée ne correspondant pas forcément aux souhaits du conducteur.

Un système classique de commande d'une machine attelée à un tracteur agricole est décrit dans le document FR 2 727 821. Dans ce cas, les différents fonctions exploitables sur cette cette machine sont programmées en avance et elle sont présentées au conducteur sur un tableau regroupées sous forme des modules pour être sélectionnées à l'aide d'une poignée. Chaque module comporte une action principale et plusiers actions secondaires.

On connaît aussi par le document FR 2 671 118 un système pour l'automatisation des manoeuvres répétitives sur un engin des travaux publics muni des outils relevables atteles à celui-ci qui comprend une phase d'apprentissage pour programmer une manoeuvre désirée et una phase successive d'éxecution des manouevres mémorisées après réception d'une commande.

La présente invention a pour but de réduire le nombre d'opérations, répétitives effectuées par le conducteur d'un tracteur lors d'un demi-tour quel que soit l'outil attelé à celui-ci et tout en laissant au conducteur la maîtrise de la conduite d'un tracteur etla maîtrise des actions effectuées de façon automatique.

Dans ce but elle propose un procédé d'automatisation des tâches répétitives effectuées lors d'un demi-tour par le conducteur d'un tracteur agricole muni d'outils relevables attelés à celui-ci, comprenant une étape de mémorisation d'actions engagées par le conducteur sur les commandes classiques du tracteur et des outils et une étape de reproduction desdites actions à réception d'ordres de commande du conducteur. En particulier, les actions sont classées en modèles d'exécution comprenant plusieurs groupes d'actions successifs composés d'une action principale commandé par le conducteur et éventuellement d'une ou plusieurs actions secondaires synchronisées avec l'action principale.

Ainsi, le procédé reproduit les habitudes de conduite d'un conducteur, ce qui est d'un très grand confort pour celui-ci. Les actions mémorisées sont, notamment, celles engagées par le conducteur lors de l'exécution manuelle d'une séquence de tâches répétitives rencontrées pendant les opérations de demi-tours, mais également celles pouvant être effectuées sur la ligne de travail ou encore à poste fixe.

L'automatisation peut être totale, auquel cas le conducteur est déchargé de toute action sur une commande particulière du tracteur (accélération, relevage, etc.). On peut aussi prévoir une automatisation partielle d'une partie des commandes de l'engin.

Pour un besoin d'utilisation donné, tel que l'automatisation du demi-tour au labour, on peut prévoir une mémorisation effectuée d'avance par le constructeur et reproduite par le conducteur, à défaut d'autre mémorisation.

Avantageusement, on mémorise les grandeurs relatives auxdites actions, par exemple la durée de celles-ci, l'état initial, l'état final...

On peut également mémoriser les états de l'ensemble des fonctions de l'engin, tels que régime du moteur, vitesse d'avancement, direction.

Dans un mode de réalisation de l'invention, on procède à un étape de filtrage des actions considérées comme non représentatives. Dans un mode de réalisation de l'invention, on procède à une étape d'affichage des actions mémorisées, puis éventuellement, de modification par le conducteur des actions affichées.

Lors de l'étape de reproduction des actions, le conducteur peut interrompre l'action en cours puis la reprendre. Il peut aussi interrompre l'action en cours puis reprendre le modèle d'exécution suivant celui dont fait partie l'action interrompue.

Avantageusement, la reproduction de chaque groupe d'actions est commandée par un moyen de commande unique.

Dans un mode de réalisation de l'invention, on mémorise et on reproduit des actions appartenant à un modèle d'exécution. On peut aussi mémoriser et reproduire des actions liées à deux modèles d'exécution successifs du tracteur.

Dans un mode de réalisation de l'invention, on procède à une étape de reconnaissance du début et de la fin de l'étape de mémorisation. Le conducteur peut lancer un modèle d'exécution sans passer par l'étape de mémorisation, celle-ci ayant eu lieu au préalable.

L'invention a également pour objet un dispositif pour l'automatisation des tâches répétitives effectuées lors d'un demi-tour par le conducteur d'un tracteur agricole muni d'outils relevables attelés à celui-ci, comprenant un calculateur (29), une mémoire, des moyens de surveillance d'organes du tracteur agricole (16-21) et des outils (34), ainsi que des moyens de commande desdits organes (22-28), le calculateur étant adapté pour mémoriser les actions engagées par le conducteur sur les commandes classiques du tracteur et des outils et pour reproduire lesdites actions à réception d'ordres de commande du conducteur. En particulier, le calculateur est adapté à classer les actions en modèles d'exécution comprenant plusieurs groupes d'actions successifs, composés d'une action principale, commandé par le conducteur, et éventuellement d'une ou plusieurs actions secondaires, synchronisées avec l'action principale.

On peut prévoir que l'étape de mémorisation des actions engagées par le conducteur intervient pendant deux demi-tours successifs et est engagée par le conducteur. Le dispositif mémorise alors l'enchaînement des actions réalisées manuellement par le conducteur sur les commandes classiques de l'engin à partir d'informations délivrées par des capteurs placés sur l'engin et éventuellement sur le ou les outils solidaires de l'engin. L'analyse réalisée à la fin du second demi-tour conduit à des regroupements d'actions. Le dispositif sauvegarde alors en mémoire les deux modèles d'exécution indépendants correspondant aux deux demi-tours réalisés. Ensuite, lors de l'étape de reproduction des actions mémorisées, les deux modèles de demi-tours sont reproduits alternativement sous le contrôle du dispositif. Le conducteur conserve la maîtrise de la direction de l'engin et du temps. Il déclenche un groupe d'actions en fonction du stade atteint dans la progression du demi-tour, par une simple pression sur un seul et unique bouton de commande placé de façon à lui demander un minimum d'efforts. L'exécution de l'action principale est lancée par le dispositif dès l'ordre reçu sur le bouton de commande et l'enchaînement automatique des actions secondaires et leur synchronisation sont entièrement automatiques.

Plusieurs facteurs difficilement modélisables ont une influence sur l'exécution du demi-tour d'un engin. La parcelle de terrain sur laquelle évolue l'engin peut être inclinée, ce qui peut nécessiter l'adaptation du régime moteur ou l'utilisation des freins au cours des manoeuvres. Des obstacles tels que des arbres ou des clôtures ont également une influence sur la conduite de l'engin. Selon le type d'outil mis en oeuvre par l'engin, les commandes à actionner sont différentes. Le demi-tour de l'engin est effectué par le conducteur de façon différente selon qu'il travaille avec un outil étroit ou large, court ou long. Le demi-tour dépend également des caractéristiques de l'engin utilisé. Les manoeuvres peuvent être influencées par l'angle maximum de braquage des roues de l'engin ou le désenclenchement aisé ou non du pont avant et/ou du blocage de différentiel. Selon le type d'engin, l'inverseur de sens de marche doit être passé à l'arrêt ou peut être passé en marche et le changement de vitesse peut s'effectuer avec ou sans débrayage. Enfin, les habitudes du conducteur conditionnent également le type de manoeuvre effectué lors d'un demi-tour. Certains conducteurs agissent sur les freins pour faciliter la rotation de l'engin. D'autres passent de l'accélérateur à main à l'accélérateur à pied pour pouvoir faire varier plus aisément le régime du moteur. Ces facteurs peuvent être reproduits par mémorisation de données en provenance de capteurs.

A la fin de l'étape de mémorisation, une présentation des groupes d'action est proposée au conducteur en vue de son approbation. Ce procédé permet à la fois une réduction du nombre d'actions devant être engagées par le conducteur, cette réduction étant d'autant plus importante que le nombre d'outils attelés à l'engin est élevé, et une centralisation des commandes sur un bouton de commande unique que l'on peut disposer par exemple sur l'accoudoir du siège de l'engin.

L'invention sera mieux comprise à l'étude de la description détaillée d'un mode de réalisation pris à titre d'exemple et illustré par les dessins annexés, sur lesquels:
la figure 1 est une vue schématique de côté d'un tracteur agricole équipé d'un dispositif conforme à l'invention; et
la figure 2 est un schéma de fonctionnement du procédé conforme à l'invention.

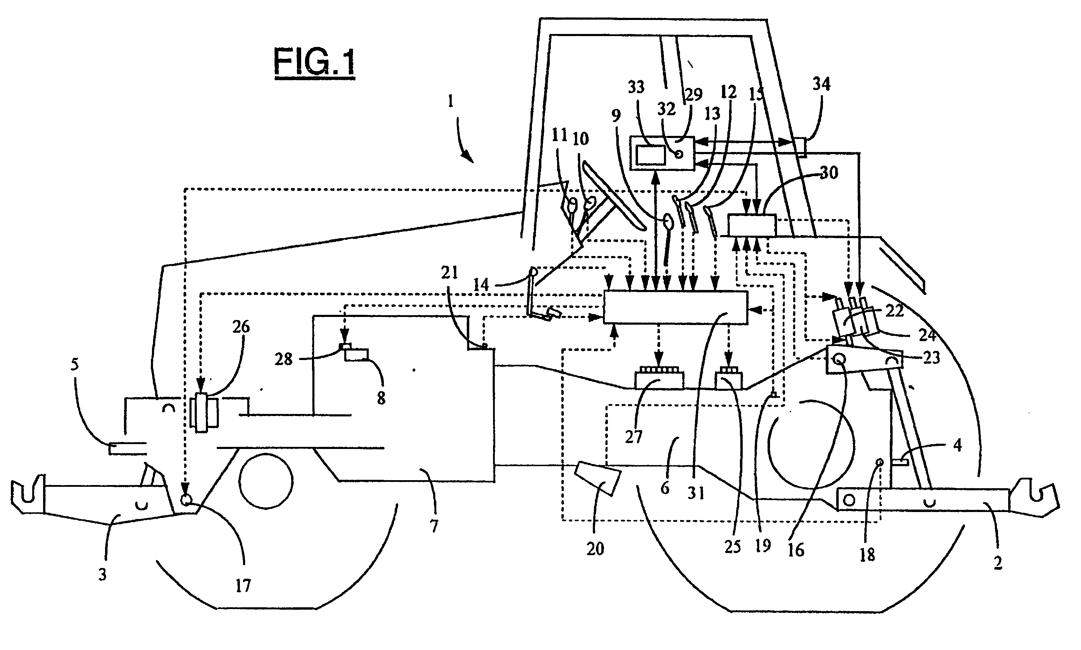

Comme on peut le voir sur la figure 1, le tracteur agricole 1 comprend un relevage arrière 2 et un relevage avant 3 prévus pour supporter des outils non représentés, tels qu'une charrue, un semoir, une herse rotative, etc. Des prises de force arrière 4 et avant 5 sont également prévues à proximité des relevages 2 et 3 pour l'entraînement d'outils animés. Le tracteur 1 comprend un organe de transmission 6 entraîné par un moteur 7 pourvu d'une pompe d'injection 8. L'organe de transmission 6 est commandé par un levier de changement de vitesse 9 à disposition du conducteur. Il est également prévu un levier d'inverseur 10 pour le changement de sens d'avancement du tracteur 1.

Le conducteur a également à sa disposition un levier d'accélérateur 11 pour commander le régime du moteur 7, un levier d'enclenchement 12 de la prise de force arrière 4, un levier d'enclenchement 13 de la prise de force avant 5, une pédale d'embrayage 14 pour la commande de la transmission 6, et au moins un levier 15 de distributeur hydraulique auxiliaire prévu pour la commande d'un vérin hydraulique d'un outil tel qu'une charrue semi-portée. En général, trois leviers de distributeur hydraulique sont prévus, pour la commande de vérins, l'alimentation de moteurs hydrauliques, etc.

Le relevage arrière 2 est pourvu d'un capteur de position 16. De même, le relevage avant 3 est pourvu d'un capteur de position 17. La prise de force arrière 4 est pourvue d'un capteur de rotation 18. En sortie de transmission, est prévu un capteur de vitesse d'avancement théorique 19 complété par un capteur de vitesse d'avancement réelle 20, par exemple un radar. Le moteur 7 comprend un capteur de régime 21 qui sert également de capteur de régime de la prise de force avant 5 dont le régime dépend de celui du moteur 7. L'actionnement du relevage arrière 2, du relevage avant 3 et des fonctions hydrauliques de l'outil s'effectue au moyen de distributeurs de pilotage 22, 23 et 24, respectivement.

Le tracteur comprend également un bloc d'électrovannes 25 prévu pour le pilotage des automatismes tels que l'enclenchement de la prise de force arrière 4, l'enclenchement d'un pont avant du tracteur 1, le blocage du différentiel. La prise de force avant 5 est pourvue d'un embrayage électrique 26 disposé entre le moteur 7 et ladite prise de force avant 5. On prévoit également un bloc d'électrovannes 27 pour le pilotage de l'organe de transmission 6, notamment le pilotage d'un embrayage principal, de l'inverseur et des changements de vitesses. Le tracteur 1 comprend un servo-moteur 28 de pilotage de la pompe d'injection 8.

Le dispositif d'automatisation comprend un calculateur 29 pourvu d'une mémoire non représentée et relié à un sous-ensemble calculateur 30 pour le pilotage du relevage et à un sous-ensemble calculateur 31 pour le pilotage du moteur 7 et de la transmission 6. Le calculateur 29 comprend un bouton de commande 32 d'exécution automatique des actions et un afficheur 33. On prévoit également une prise 34 pouvant servir à la liaison avec les capteurs de l'outil. Le calculateur 29 est relié aux distributeurs hydrauliques 22 à 24 et à la prise 34 et est disposé à proximité immédiate du conducteur. Le sous-ensemble calculateur 30 pour le pilotage du relevage est relié aux capteurs de position 16 et 17 des relevages arrière 2 et avant 3, au capteur de vitesse d'avancement théorique 19, au capteur de vitesse d'avancement réelle 20, aux distributeurs hydrauliques 22 à 24 et au sous-ensemble 31 prévu pour le calcul du pilotage du moteur 7 et de la transmission 6.

Le sous-ensemble 31 est relié au levier de changement de vitesse 9, au levier d'inverseur 10, au levier d'accélérateur 11, aux leviers d'enclenchement 12 et 13 de prise de force arrière 4 et avant 5, à la pédale d'embrayage 14, au levier 15 de distributeur auxiliaire, au capteur de régime 18 de la prise de force arrière 4, au capteur de vitesse d'avancement théorique 19, au capteur de régime moteur 21, au bloc d'électrovanne 25 de pilotage des automatismes, à l'embrayage électrique 26 de la prise de force avant 5, au bloc d'électrovanne 27 de pilotage de la transmission 6, et au servo-moteur 28 de pilotage de la pompe d'injection 8.

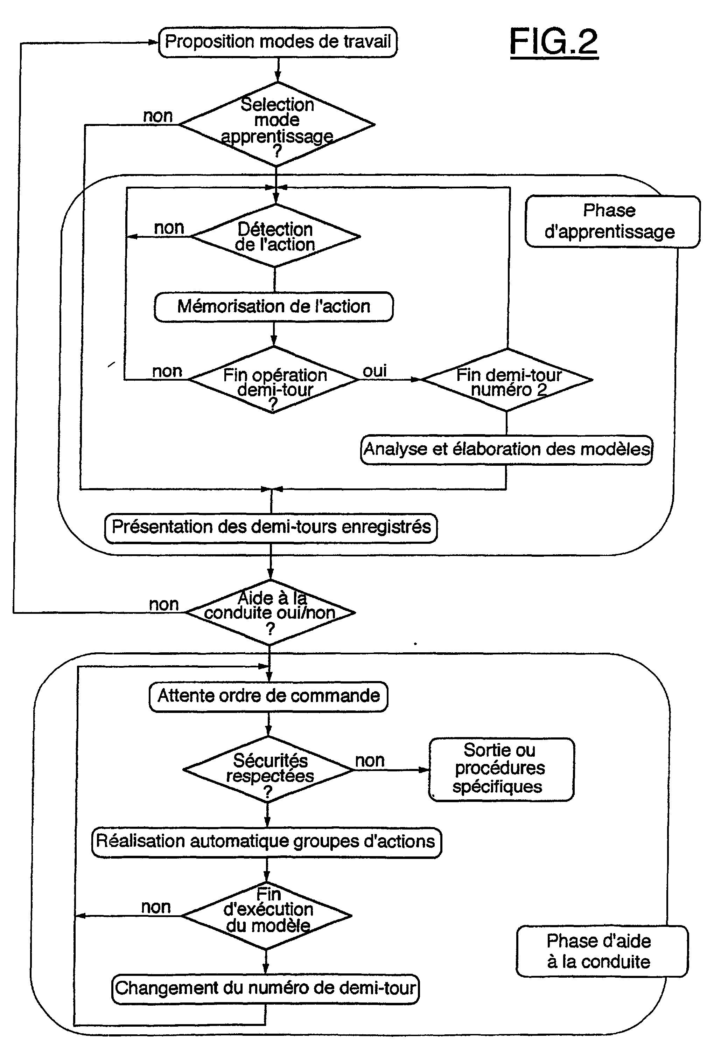

Le tracteur va fonctionner de la façon exposée à la figure 2. Après le démarrage du tracteur, l'afficheur du calculateur va proposer des modes de travail au conducteur. Celui-ci, une fois arrivé dans la parcelle à travailler, va, s'il ne désire pas utiliser les enregistrements précédents, sélectionner le mode de mémorisation désigné également par mode d'apprentissage à la figure 2, dans lequel le calculateur va mémoriser les actions engagées par le conducteur. Les différentes actions engagées par le conducteur seront détectées grâce aux capteurs du tracteur et éventuellement du ou des outils attelés au tracteur, puis mémorisées. Le calculateur détectera le débit et la fin du premier demi-tour, puis détectera et mémorisera les actions liées au deuxième demi-tour et procédera à l'analyse et à l'élaboration des modèles d'exécution en classant les actions en actions principales et en actions secondaires. Les modèles d'exécution seront ensuite présentés au conducteur sur l'afficheur connecté au calculateur. Le conducteur a alors la possibilité de valider les modèles d'exécution ou de les modifier.

Par exemple, dans le cas d'un tracteur agricole équipé d'une charrue, un demi-tour effectué par un conducteur peut requérir les opérations suivantes : relevage de la charrue, baisse du régime du moteur, débrayage, positionnement de l'inverseur en marche arrière, embrayage, pivotement de la charrue commandé par le levier distributeur auxiliaire, débrayage, positionnement de l'inverseur en marche avant, embrayage, mise en terre de la charrue et augmentation du régime moteur, soit au total onze actions compte non tenu des actions du conducteur sur la direction.

Le calculateur va modéliser le demi-tour comme suit:
- relevage de la charrue (action principale)
- baisse du régime du moteur (action secondaire)
- débrayage (action principale)
- positionnement de l'inverseur en marche arrière (action secondaire)
- embrayage (action secondaire)
- pivotement de la charrue (action secondaire)
- débrayage (action principale)
- positionnement de l'inverseur en marche avant (action secondaire)
- embrayage (action secondaire)
- mise en terre de la charrue par baisse du relevage (action principale)
- augmentation du régime du moteur (action secondaire).

Le modèle d'exécution contient quatre actions principales et sept actions secondaires. Le conducteur n'aura que quatre appuis à réaliser sur le bouton de commande pour effectuer un demi-tour. Il déclenchera successivement avec le même bouton de commande le relevage de la charrue, le premier débrayage, le deuxième débrayage et la mise en terre de la charrue, les autres actions se réalisant automatiquement. Un tel modèle d'exécution peut être modifié par le conducteur, par exemple en augmentant ou en baissant le régime du moteur, en transformant des actions secondaires en actions principales.

Le conducteur sélectionne alors l'aide à la conduite en vue de la reproduction des actions mémorisées. Le tracteur étant arrivé à une extrémité de la parcelle de terre, le conducteur appui sur le bouton de commande pour engager le premier groupe d'actions du modèle d'exécution. Le calculateur vérifie alors qu'un certain nombre de sécurités, notamment liées à la hauteur de la charrue, sont respectées afin d'éviter des fausses manoeuvres potentiellement dangereuses à un stade ou à un moment inapproprié. Si les sécurités sont respectées, le calculateur engage l'exécution d'un groupe d'actions, l'exécution de chaque groupe d'actions suivant nécessitant un appui du conducteur sur le bouton de commande unique. Pendant le déroulement du modèle d'exécution, le conducteur peut, s'il le souhaite, reprendre à tout moment les manoeuvres avec les commandes d'origines. A la fin d'un modèle d'exécution, le calculateur se prépare soit à réexécuter le même modèle d'exécution lors du demi-tour suivant au cas où les deux demi-tours successifs sont identiques, soit à exécuter un autre type de modèle d'exécution enregistré pour effectuer le demi-tour à l'autre extrémité de la parcelle de terre.

L'analyse des actions du conducteur mémorisées lors de la première étape a pour but de ne conserver que les actions utiles au demi-tour. A cet effet, une succession de débrayages et d'embrayages sans action intermédiaire du conducteur est effacée de la mémoire. Une telle succession est réalisée par le conducteur pour maîtriser l'avancement du tracteur. Le procédé vise à conserver au conducteur la maîtrise du temps et de la direction du tracteur.

Indépendamment du procédé d'automatisation, le conducteur pourra toujours, s'il le souhaite, agir sur le régime du moteur par l'intermédiaire de la commande à main ou à pied en vue d'une meilleure adaptation aux conditions du terrain.

La classification des actions entre actions principales et actions secondaires est effectuée en fonction d'un certain nombre de règles de décision. Certaines manoeuvres seront toujours considérées comme actions principales. D'autres toujours considérées comme actions secondaires. D'autres, enfin, seront considérées comme des actions principales ou secondaires suivant leur position dans l'enchaînement de la séquence.

Le conducteur peut arrêter le mouvement du tracteur par une action sur la pédale de débrayage. L'avancement du tracteur est interrompu mais les actions secondaires en cours d'exécution sont exécutées, sauf une éventuelle action d'embrayage. En effet, les actions exécutées en roulant peuvent l'être à l'arrêt.

On prévoit un bouton d'arrêt d'urgence dont l'enfoncement provoque l'interruption immédiate de l'action en cours. Un message apparaît sur l'afficheur signifiant au conducteur que le dispositif ne s'occupe plus de ce demi-tour et qu'il attend que le conducteur termine seul avec les commandes classiques. Le dispositif sera prêt à exécuter un nouveau demi-tour dès qu'il aura repéré la phase de travail suivante. Si le conducteur appuie une seconde fois sur le bouton d'arrêt d'urgence pendant le demi-tour, il sortira du procédé d'automatisation du demi-tour pour se retrouver dans la situation initiale lors du démarrage du tracteur.

Si le conducteur intervient sur une commande quelconque du tracteur hormis l'embrayage ou l'accélérateur, le même message apparaît sur l'afficheur que pour la première pression sur le bouton d'arrêt d'urgence. Si l'intervention du conducteur sur une commande a lieu pendant la phase de travail en-dehors des demi-tours, elle s'exécutera et n'aura aucune incidence sur le demi-tour suivant. Seule une modification du régime du moteur entraînera l'affichage de la possibilité de conserver ce nouveau régime pour le demi-tour. En revanche, l'enfoncement du bouton d'arrêt d'urgence sur la ligne de travail permet de sortir du procédé d'automatisation. Si, pendant un demi-tour, le conducteur intervient sur l'une des commandes de l'accélérateur, le dispositif abandonne la gestion du régime moteur pour prendre en compte l'ordre du conducteur. Dans la fin du demi-tour, le conducteur continue à s'occuper de la gestion du régime moteur jusqu'à ce que l'afficheur lui annonce la mise en place du régime de travail. Dans la ligne de travail, le calculateur attend une stabilité du régime moteur pendant une période de l'ordre de 10 secondes. Il affiche alors la proposition de conserver ce nouveau régime.

Bien entendu, le procédé s'adapte à toutes configurations de l'engin, quel que soit le nombre d'outils attelés situés à l'avant et/ou à l'arrière de l'engin, qu'ils soient poussés, portés, semi-portés, tractés, utilisant ou non les sources d'énergie de l'engin, et le type de l'engin, tracteur agricole, engin de travaux publics, etc.

Grâce à l'invention, le conducteur de l'engin n'a pas besoin de programmer le dispositif dans la mesure où la programmation est effectuée grâce à la surveillance des différents paramètres de l'engin lors de la phase de mémorisation pendant laquelle le conducteur dirige son engin de façon classique.

## Revendications

1. Procédé d'automatisation des tâches répétitives effectuées lors d'un demi-tour, par le conducteur d'un tracteur agricole muni d'outils relevables attelés à celui-ci, comprenant une étape de mémorisation d'actions engagées par le conducteur sur les commandes classiques du tracteur et des outils et une étape de reproduction desdites actions à réception d'ordres de commande du conducteur, **caractérisé en ce que** les actions sont classées en modèles d'exécution comprenant plusieurs groupes d'actions successifs composés d'une action principale commandée par le conducteur et éventuellement d'une ou plusieurs actions secondaires synchronisées avec l'action principale.

2. Procédé selon la revendication 1
**caractérisé par** une étape de mémorisation de grandeurs relatives auxdites actions.

3. Procédé selon la revendication 1 ou 2
**caractérisé par** une étape de mémorisation des états de l'ensemble des fonctions du tracteur et des outils

4. Procédé selon la revendication 1,2, ou 3
**caractérisé par** une étape de filtrage des actions considérées comme non représentatives.

5. Procédé selon l'une quelconque des revendications précédentes, **caractérisé par** une étape d'affichage des actions mémorisées, le conducteur de l'engin pouvant les valider où les modifier.

6. Procédé selon l'une quelconque des revendications précédentes, **caractérisé par** une étape d'interruption des actions reproduites et une étape de reprise de l'action interrompue.

7. Procédé selon l'une quelconque des revendications précédentes, **caractérisé par** une étape d'interruption des actions reproduites et une étape de reprise du modèle d'exécution suivant celui dont fait partie l'action interrompue.

8. Procédé selon l'une quelconque des revendications précédentes, **caractérise par le fait que** la reproduction de chaque groupe d'actions est commandée par un moyen de commande unique.

9. Procédé selon l'une des revendications précédentes **caractérisé par** la mémorisation et la reproduction des actions liées à deux modèles d'exécution successifs.

10. Procédé selon l'une quelconque des revendications précédentes, **caractérisé par** une étape de reconnaissance du début et de la fin de l'étape de mémorisation.

11. procédé selon l'une des revendications précédentes **caractérisé par le fait que** le conducteur lance un modèle d'exécution sans passer par l'étape de mémorisation.

12. Dispositif pour l'automatisation des tâches répétitives effectuées lors d'un demi-tour par le conducteur d'un tracteur agricole muni d'outils relevables attelés à celui-ci, comprenant un calculateur (29), une mémoire, des moyens de surveillance d'organes du tracteur agricole (16-21) et des outils (34), ainsi que des moyens de commande desdits organes (22-28), le calculateur étant adapté pour mémoriser les actions engagées par le conducteur sur les commandes classiques du tracteur et des outils et pour reproduire lesdites actions à réception d'ordres de commande du conducteur, **caractérisé en ce que** le calculateur est adapté à classer les actions en modètes d'exécution comprenant plusieurs groupes d'actions successifs composés d'une action principale commandé par le conducteur et éventuellement d'une ou plusieurs actions secondaires synchronisées avec l'action principale.

## Patentansprüche

1. Verfahren zur Automatisierung der während der Durchführung einer Wende vom Fahrer eines mit anhebbaren angehängten Werkzeugen versehenen landwirtschaftlichen Traktors wiederholt durchzuführenden Aufgaben, das den Schritt der Speicherung der vom Fahrer mittels herkömmlicher Steuerbefehle eingeleiteten Arbeitsvorgänge für den Traktor und die Werkzeuge aufweist und einen Schritt des Reproduzierens dieser Arbeitsvorgänge beim Eintreffen von vom Fahrer stammenden Steuerbefehlen, **dadurch gekennzeichnet, dass** die Arbeitsvorgänge in Form von Durchführungsmodellen klassifiziert werden, die mehrere aufeinander folgende Gruppen von Arbeitsvorgängen enthalten, die aus einem vom Fahrer ansteuerbaren Hauptarbeitsvorgang und gegebenenfalls aus einem oder mehreren Sekundärarbeitsvorgängen bestehen, die mit dem Hauptarbeitsvorgang synchronisiert sind.

2. Verfahren nach Anspruch 1, **gekennzeichnet durch** einen Schritt der Speicherung von für diese Arbeitsvorgänge charakteristischen Größen.

3. Verfahren nach Anspruch 1 oder 2, **gekennzeichnet durch** einen Schritt der Speicherung der Zustände der Funktionen der aus dem Traktor und aus den Werkzeugen bestehenden Gesamtanordnung.

4. Verfahren nach Anspruch 1, 2 oder 3, **gekennzeichnet durch** einen Schritt der Filterung der als nicht repräsentativ angesehenen Arbeitsvorgänge.

5. Verfahren nach einem der vorhergehenden Ansprüche, **gekennzeichnet durch** einen Schritt des Anzeigens der gespeicherten Arbeitsvorgänge, wobei der Fahrer der Maschine diese bestätigen oder verändern kann.

6. Verfahren nach einem der vorhergehenden Ansprüche, **gekennzeichnet durch** einen Schritt des Unterbrechens der reproduzierten Arbeitsvorgänge und **durch** einen Schritt der Wiederaufnahme des unterbrochenen Arbeitsvorgangs.

7. Verfahren nach einem der vorhergehenden Ansprüche, **gekennzeichnet durch** einen Schritt des Unterbrechens der reproduzierten Arbeitsvorgänge und **durch** einen Schritt der Wiederaufnahme desjenigen nachfolgenden Durchführungsmodells, zu dem der unterbrochene Arbeitsvorgang gehört.

8. Verfahren nach einem der vorhergehenden Ansprüche, **dadurch gekennzeichnet, dass** das Reproduzieren einer jeden Gruppe von Arbeitsvorgängen mittels einer einzigen Anordnung zur Steuerung erfolgt.

9. Verfahren nach einem der vorhergehenden Ansprüche, **gekennzeichnet durch** die Speicherung und das Reproduzieren von Arbeitsvorgängen, die zu zwei aufeinander folgende Durchführungsmodelle gehören

10. Verfahren nach einem der vorhergehenden Ansprüche, **gekennzeichnet durch** einen Schritt des Erkennens des Beginns und des Endes des Schrittes der Speicherung.

11. Verfahren nach einem der vorhergehenden Ansprüche, **dadurch gekennzeichnet, dass** der Fahrer ein Durchführungsmodell einleitet ohne den Schritt der Speicherung zu durchzuführen.

12. Vorrichtung zur Automatisierung der während der Durchführung einer Wende vom Fahrer eines mit anhebbaren angehängten Werkzeugen versehenen landwirtschaftlichen Traktors wiederholt durchzuführenden Aufgaben, mit einem Rechner (29), mit einem Speicher, mit Anordnungen (16-21) für die Überwachung der Bauteile des Traktors und (34) für die Überwachung der Werkzeuge, sowie mit einer Anordnung (22-28) zur Steuerung der Bauteile, wobei der Rechner derart ausgelegt ist, dass er die vom Fahrer durch herkömmliche Steuerbefehle für den Traktor und die Werkzeuge eingeleiteten Arbeitsvorgänge speichert und diese Arbeitsvorgänge bei Erhalt von vom Fahrer stammenden Steuerbefehlen reproduziert, **dadurch gekennzeichnet, dass** der Rechner die Arbeitsvorgänge in Durchführungsmodelle klassifiziert, die jeweils mehrere aufeinander folgende Gruppen von Arbeitsvorgängen enthalten, bestehend aus einem vom Fahrer ansteuerbaren Hauptarbeitsvorgang und gegebenenfalls einem oder mehreren Sekundärarbeitsvorgängen, die mit dem Hauptarbeitsvorgang synchronisiert sind.

## Claims

1. Method for automating the repetitive tasks performed during a turn-around by the driver of an agricultural tractor equipped with liftable tools harnessed thereto, comprising a step of memorising actions performed by the driver upon the standard tractor and tool controls, and a step of reproducing said actions upon receipt of commands from the driver, **characterised in that** the actions are classified into execution models comprising several groups of successive actions composed of a main action controlled by the driver and possibly one or more secondary actions synchronised with the main action.

2. Method according to claim 1, **characterised by** a step of memorising values relative to said actions.

3. Method according to claim 1 or 2, **characterised by** a step of memorising the states of all the functions of the tractor and of the tools.

4. Method according to claim 1, 2 or 3, **characterised by** the step of filtering the actions considered as not being representative.

5. Method according to any one of the preceding claims, **characterised by** a step of displaying the actions memorised, the plant driver being able to validate or change said memorised actions.

6. Method according to any one of the preceding claims, **characterised by** a step of interrupting the actions reproduced and a step of taking up again the action that was interrupted.

7. Method according to any one of the preceding claims, **characterised by** a step of interrupting reproduced actions and a step of taking up again the next model of execution forming part of the activity interrupted.

8. Method according to any one of the preceding claims, **characterised by** the fact that reproduction of each group of actions is controlled by a single control means.

9. Method according to one of the preceding claims, **characterised by** the memorising and reproducing of actions linked to two successive execution models.

10. Method according to any one of the preceding claims, **characterised by** a step of recognising the start and the end of the memorising step.

11. Method according to one of the preceding claims, **characterised by** the fact that the driver initiates an execution model without going through the memorising step.

12. Device for automating the repetitive tasks performed during a turn-around by the driver of an agricultural tractor equipped with liftable tools harnessed thereto, comprising a computer (29), a memory, means for monitoring members of the agricultural tractor (16 - 21) and of the tools (34), and means for control of said members (22 - 28), the computer being capable of memorising the actions performed by the driver upon the standard controls of the tractor and the tools, and of reproducing said actions upon receipt of commands from the driver, **characterised in that** the computer is capable of classifying the actions into execution models comprising several groups of successive actions composed of a main action controlled by the driver and possibly of one or more secondary actions synchronised with the main action.
